# EUROPÄISCHE PATENTSCHRIFT

(11) **EP 3 971 406 B1**
(45) Veröffentlichungstag und Bekanntmachung des Hinweises auf die Patenterteilung: **20.03.2024**
(21) Anmeldenummer: 21191880.0
(22) Anmeldetag: 18.08.2021
(51) Int. Cl.: F02K 9/64, F02K 9/52

(54) **BRENNKAMMERABSCHNITT MIT INTEGRIERTEM LEITBLECH UND VERFAHREN ZUM HERSTELLEN EINES BRENNKAMMERABSCHNITTS**
COMBUSTION CHAMBER SECTION WITH INTEGRATED BAFFLE AND METHOD FOR MANUFACTURING A COMBUSTION CHAMBER SECTION
SECTION DE CHAMBRE DE COMBUSTION POURVUE DE DÉFLECTEUR INTÉGRÉ ET PROCÉDÉ DE FABRICATION D'UNE SECTION DE CHAMBRE DE COMBUSTION

(30) Priorität: 21.09.2020 DE 102020124530
(43) Veröffentlichungstag der Anmeldung: 23.03.2022
(73) Patentinhaber: ArianeGroup GmbH, 82024 Taufkirchen (DE)
(72) Erfinder: Maeding, Chris Udo, 85716 Unterschleißheim (DE)
(74) Vertreter: Schornack, Oliver

(56) Entgegenhaltungen:
- GB-A- 1 102 138
- US-A- 3 200 589
- US-A- 3 242 670
- US-A- 3 413 810
- US-A1- 2019 093 603

## Beschreibung

Die Erfindung betrifft einen Brennkammerabschnitt mit integriertem Leitblech, eine Brennkammer sowie ein Raketentriebwerk mit solch einem Brennkammerabschnitt, und ein Verfahren zum Herstellen eines solchen Brennkammerabschnitts sowie einen Computer-lesbaren Datenträger mit Instruktionen zur Durchführung des Herstellverfahrens. Insbesondere betrifft die Erfindung einen Brennkammerabschnitt, mit einem Brennkammerkörper, der einstückig mit einem in das Innere der Brennkammer ragenden Leitblech gebildet ist. Ferner werden eine Brennkammer sowie ein Raketentriebwerk mit solch einem Brennkammerabschnitt und ein Schichtaufbauverfahren zum Herstellen eines solchen Brennkammerabschnitts sowie ein Computer-lesbarer Datenträger mit Instruktionen zum Durchführen des Schichtaufbauverfahrens beschrieben.

Brennkammern von Flüssigraketentriebwerken dienen der effizienten Verbrennung der jeweiligen Treibstoffpaarung bestehend aus Oxidator und Brennstoff. Hierfür werden die Treibstoffkomponenten über ein spezielles Einspritzsystem der Kammer zugeführt. In der Kammer erfolgt dann, in Abhängigkeit von den jeweiligen Betriebszuständen, die Verdampfung, Durchmischung sowie chemische Umsetzung und die beginnende Umwandlung in kinetische Energie, deren Hauptzuwachs im Bereich eines subsonischen und supersonischen Düsenbereichs liegt. Die Strömung im Bereich der Brennkammer ist von turbulenter Durchmischung gekennzeichnet. Für einen zuverlässigen Betrieb des Raketentriebwerks ist eine hohe Verbrennungsstabilität erstrebenswert.

Ferner ist insbesondere im Bereich der Heißgaswände (Innenwände der Brennkammer und Schubdüse) eine Kühlung notwendig. So kann beispielsweise bei einer Regenerativkühlung die hohe Wärmeentwicklung über Kühlmittelkanäle in den Heißgaswänden, durch die mindestens eine Treibstoffkomponente strömt, abgedämpft werden.

Aus den verschiedenen Formen für Brennkammern, wie zum Beispiel kugelförmig, birnenförmig, konisch, zylindrisch oder auch in Form einer Ringbrennkammer, hat sich die zylindrische Brennraumkonfiguration durchgesetzt. Insbesondere in der Fertigung weist eine zylindrische Brennkammer Vorteile auf. Jedoch weisen Brennkammern mit rundem Querschnitt eine erhöhte Anfälligkeit hinsichtlich hochfrequenter Schwingungen, insbesondere transversale Schwingungsmoden auf, welche den Eigenfrequenzen dieser Bauformen entsprechen. Diese transversalen Schwingungen, also Schwingungsausbreitung in Radialrichtung der runden Brennkammer, führt zu einer zusätzlichen Energiefreisetzung in der Brennkammer mit einhergehender Überhitzung. Ferner ist eine starke Druckfluktuation zu verzeichnen.

Um diesen Schwingungen entgegenzuwirken oder sie zu vermeiden, wurden an der Kopfplatte (oder Einspritzplatte) der Brennkammer Leitbleche (in der englischen Fachsprache auch als "baffle" bezeichnet) angeordnet. In der DE 10 2016 209 650 A1 wird vorgeschlagen, anstatt Leitblechen eine bestimmte Anzahl von Koaxial-Einspritzelementen an der Kopfplatte mit einem zentralen Hülsenkörper vorzusehen, der weiter von der Kopfplatte ins Innere der Brennkammer hervorsteht als die übrigen Einspritzelemente. Die dadurch erzielte axiale Staffelung der Flammenfront in der Brennkammer reduziert oder verhindert die Bildung und/oder die Ausbreitung von Schwingungen in ähnlicher Weise wie Leitbleche.

US3200589, US3242670 und US3413810 zeigen einen Brennkammerabschnitt gemäß dem Stand der Technik.

Vor diesem Hintergrund liegt der vorliegenden Erfindung die Aufgabe zugrunde, eine baulich einfachere Möglichkeit zur Reduzierung von transversalen Schwingungen in der Brennkammer zu schaffen.

Diese Aufgabe wird durch einen Brennkammerabschnitt mit den Merkmalen des Anspruchs 1, eine Brennkammer mit den Merkmalen des Anspruchs 10, ein Raketentriebwerk mit den Merkmalen des Anspruchs 11 sowie ein Verfahren mit den Merkmalen des Anspruchs 12 und einem entsprechenden Datenträger mit Instruktionen gemäß Anspruch 13 gelöst.

Gemäß einem ersten Aspekt zum besseren Verständnis der vorliegenden Offenbarung umfasst ein Brennkammerabschnitt für eine Brennkammer eines Raketentriebwerks einen Brennkammerkörper, der ein Brennkammervolumen umschließt und in dem Kühlmittelkanäle angeordnet sind. Der Brennkammerkörper kann aus einer äußeren Hülle und einer inneren Hülle bestehen, zwischen der Stege oder ähnliche Trennelemente angeordnet sind, die einen Zwischenraum zwischen den beiden Hüllen in Kühlmittelkanäle unterteilen. Durch die Kühlmittelkanäle kann beispielsweise Treibstoff strömen, der sich dabei für die spätere Verbrennung günstig erwärmt und gleichzeitig den Brennkammerkörper, insbesondere die innere Hülle, kühlt.

Es wird ein zylindrischer Brennkammerkörper verwendet. Alternativ weist der Brennkammerkörper einen polygonalen (3-eckig, 4-eckig, 5-eckig oder mit noch einer höheren Anzahl von Ecken und Seiten) oder elliptischen Querschnitt auf.

Der Brennkammerabschnitt umfasst ferner mindestens ein Leitblech, das einstückig mit dem Brennkammerkörper gebildet ist und von dem Brennkammerkörper in das Innere der Brennkammer (den Brennraum) ragt. Durch die Anordnung des mindestens einen Leitblechs an der Innenseite des Brennkammerkörpers wird der Aufbau des Einspritzkopfes und insbesondere der Einspritzplatte für die Brennkammer deutlich vereinfacht. Da in der Einspritzplatte eine Vielzahl von Einspritzelementen vorgesehen ist, die mit mindestens zwei Treibstoffkomponenten versorgt werden müssen, ist deren Aufbau meist schon recht komplex und zeitintensiv. Die zusätzliche Anbringung von Leitblechen oder einer Teilanzahl besonders geformter Einspritzelemente wie bei herkömmlichen Einspritzplatten erhöht den Arbeitsaufwand und somit die einhergehenden Herstellkosten. Der hier beschriebene Brennkammerkörper hingegen ermöglicht eine insgesamt einfachere Herstellung von Einspritzkopf und Brennkammer.

Einstückig gebildet bedeutet hier, dass das mindestens eine Leitblech und der Brennkammerkörper aus einem zusammenhängenden Material bestehen. Beispielsweise kann der Brennkammerabschnitt, also der Brennkammerkörper mit integriertem mindestens einen Leitblech, in einem Schichtbauverfahren (auch als 3D-Druck oder ALM - additive layer manufacturing - bezeichnet) hergestellt werden. Auch können nur Teile des Brennkammerkörpers und/oder Leitblechs mit einem Schichtbauverfahren hergestellt werden und auf einem anderweitig hergestellten Abschnitt des Brennkammerkörpers und/oder Leitblechs aufgebaut werden. Beim Schichtbauverfahren können auch verschiedene Werkstoffe verwendet werden. Beispielsweise kann an den radial innen liegenden Seiten und Enden des mindestens einen Leitblechs ein stärker hitzebeständiger Werkstoff verwendet werden, als an einer Außenseite des Brennkammerkörpers.

Der Brennkammerkörper und das Leitblech können auch getrennt voneinander hergestellt werden, und anschließend aneinander befestigt werden. Dies kann beispielsweise durch Schweißen, Löten und/oder (schichtweises) Aufschmelzen erfolgen.

Zudem kann das mindestens eine Leitblech mindestens einen Kühlmittelkanal umfassen, der mit mindestens einem der Kühlmittelkanäle in dem Brennkammerkörper fluidisch verbunden ist. Durch die Anordnung eines Kühlmittelkanals in dem mindestens einen Leitblech kann dieses aktiv gekühlt werden, wodurch die Langlebigkeit des Leitblechs stark erhöht wird. Da in den meisten Brennkammern bereits Kühlmittelkanäle vorgesehen sind, um den Brennkammerkörper zu kühlen, ist die fluidische Verbindung mit dem Kühlmittelkanal des Leitblechs einfach herzustellen. Zum Beispiel kann mindestens ein in Längsrichtung der Brennkammer verlaufender Kühlmittelkanal an den mindestens einen Kühlmittelkanal in dem Leitblech fluidisch verbunden werden.

In einer Ausgestaltungsvariante kann das Leitblech einen Kühlmitteleingang und einen Kühlmittelausgang aufweisen. Ein Kühlmitteleingang und Kühlmittelausgang bedeutet hier, dass der entsprechende Kühlmittelkanal an einer Schnittseite des Leitblechs eine Öffnung bildet. Da das Leitblech einstückig mit dem Brennkammerkörper hergestellt ist, ist unter einer Schnittseite des Leitblechs hier eine gedachte Schnittstelle des Leitblechs an der Grenze zu dem Brennkammerkörper gemeint, wenn das Leitblech beispielsweise von dem Brennkammerkörper getrennt würde.

Ferner kann der mindestens eine Kühlmittelkanal des Leitblechs zwischen dem Kühlmitteleingang und dem Kühlmittelausgang verlaufen. Somit können der Kühlmitteleingang und der Kühlmittelausgang an verschiedenen Positionen des Leitblechs (und/oder des Brennkammerabschnitts) angeordnet sein, während der mindestens eine Kühlmittelkanal des Leitblechs im Inneren des Leitblechs verläuft.

In einer weiteren Ausgestaltungsvariante kann der Kühlmitteleingang des Leitblechs mit dem mindestens einen der Kühlmittelkanäle in dem Brennkammerkörper fluidisch verbunden sein. So ist beispielsweise bei der Herstellung des Brennkammerabschnitts mittels Schichtbauverfahren keine tatsächliche Öffnung in dem Leitblech vorhanden. Vielmehr wird ein in dem Inneren des Leitblechs aufgebautes, den Kühlmittelkanal im Leitblech bildendes Volumen während des Schichtbauverfahrens in ein den Kühlmittelkanal im Brennkammerkörper bildendes Volumen übergehen. Mit anderen Worten kann der Kühlmittelkanal in dem Brennkammerkörper in den Kühlmittelkanal des Leitblechs übergehen, sodass Kühlmittel nach Durchströmen des Brennkammerkörpers durch das Innere des Leitblechs strömt und dieses aktiv kühlt.

In noch einer weiteren Ausgestaltungsvariante kann jeder der Kühlmittelkanäle in dem Brennkammerkörper einen Kühlmittelausgang aufweisen. Hierbei kann es sich bei Betrachtung des Brennkammerabschnitts um eine tatsächliche Öffnung handeln, aus der Kühlmittel nach Durchströmen des Brennkammerkörpers ausströmen kann.

Beispielsweise kann in Umfangsrichtung entlang eines Querschnitts des Brennkammerkörpers neben einem der Kühlmittelausgänge ein weiterer Kühlmittelausgang eines Kühlmittelkanals in dem Brennkammerkörper angeordnet sein.

An Orten, an denen ein Leitblech vorgesehen ist, kann neben einem der Kühlmittelausgänge eines Kühlmittelkanals im Brennkammerkörper der Kühlmittelausgang des Leitblechs angeordnet sein. Mit anderen Worten liegt der Kühlmittelausgang des Leitblechs in Umfangsrichtung an einer Position, die einem Kühlmittelausgang eines Kühlmittelkanals in dem Brennkammerkörper entspräche, wenn an dieser Position kein Leitblech mit eigenem Kühlmittelkanal vorgesehen wäre. Die Kühlmittelkanäle in dem Brennkammerkörper sowie das Leitblech können dabei in Umfangsrichtung so dimensioniert sein, dass eine ganzzahlige Anzahl von Kühlmittelkanälen in dem Brennkammerkörper der Breite des Leitblechs in Umfangsrichtung entspricht. Der Brennkammerabschnitt kann damit an seinem Ende mit den Kühlmittelausgängen so ausgestaltet sein, wie herkömmliche Brennkammern ohne integrierte Leitbleche. Dadurch lässt sich der Brennkammerabschnitt auch mit herkömmlichen Einspritzköpfen und Einspritzplatten verwenden.

In einer Ausgestaltungsvariante kann ein Kühlmittelkanal in dem Brennkammerkörper in Längsrichtung des Brennkammerkörpers auf Höhe des Kühlmitteleingangs des Leitblechs enden und in den mindestens einen Kühlmittelkanal des Leitblechs münden. Mit anderen Worten kann ein Kühlmittelkanal in dem Brennkammerkörper an Positionen, an denen ein Leitblech integriert ist, in Längsrichtung des Brennkammerkörpers kürzer ausgestaltet sein als die übrigen Kühlmittelkanäle im Brennkammerkörper, die sich nicht mit einem Leitblech überlappen. Dadurch kann am Brennkammerkörper zusätzliches Material zur Befestigung/Integration des Leitblechs bereitgestellt werden. Eine Kühlung des Brennkammerkörpers an der Position, an der das Leitblech angeordnet ist, ist nicht notwendig, da das Leitblech selbst aktiv gekühlt wird.

In einer weiteren Ausgestaltungsvariante kann ein erster Kühlmittelkanal in dem Leitblech ein Kühlmittelzuleitungskanal sein, der mit dem mindestens einen Kühlmittelkanal in dem Brennkammerkörper fluidisch verbunden ist. Ferner kann der erste Kühlmittelkanal in dem Leitblech auf einer ersten Seite des Leitblechs verlaufen. Zudem kann ein zweiter Kühlmittelkanal in dem Leitblech ein Kühlmittelableitungskanal sein, der auf einer zweiten Seite des Leitblechs verläuft. Die erste und die zweite Seite des Leitblechs können gegenüberliegende Seiten des Leitblechs sein. Beispielsweise können sie im Wesentlichen gegenüberliegende Seiten des Leitblechs in Längsrichtung des Brennkammerabschnitts betrachtet sein. Alternativ können sie auch im Wesentlichen gegenüberliegende Seiten des Leitblechs in Umfangsrichtung des Brennkammerabschnitts betrachtet sein.

Dabei kann der erste Kühlmittelkanal in den zweiten Kühlmittelkanal münden oder übergehen, sodass der erste und zweite Kühlmittelkanal ein durchgehendes Volumen bilden, und die erste und zweite Seite des Leitblechs gekühlt wird.

Alternativ oder zusätzlich kann mindestens ein dritter Kühlmittelkanal den Kühlmittelzuleitungskanal mit dem Kühlmittelableitungskanal fluidisch verbinden. Dabei kann der dritte Kühlmittelkanal an einer dritten Seite des Leitblechs angeordnet sein, sodass auch die dritte Seite gekühlt wird. Bei der dritten Seite kann es sich um eine zwischen der ersten und zweiten Seite des Leitblechs liegenden Seite des Leitblechs handeln. Selbstverständlich kann der dritte Kühlmittelkanal an jeder beliebigen Position innerhalb des Leitblechs, beispielsweise in der Mitte des Leitblechs, angeordnet sein. Bei einer Vielzahl von dritten Kühlmittelkanälen können diese an jeder beliebigen Position innerhalb des Leitblechs verlaufen, einschließlich einem Kühlmittelkanal entlang der dritten Seite des Leitblechs.

Bei der hier vorliegenden Beschreibung eines Kühlmittelkanals entlang einer Seite des Leitblechs ist die Anordnung des Kühlmittelkanals im Randbereich des Leitblechs gemeint. Mit anderen Worten liegt der Kühlmittelkanal relativ knapp unter einer äußeren Oberfläche des Leitblechs, sodass diese Oberfläche ausreichend gekühlt wird. Das Material des Leitblechs, das eine Innenseite des Kühlmittelkanals begrenzt, dient der Stabilität des Leitblechs. "Relativ knapp unter einer äußeren Oberfläche" bedeutet hier eine Wandstärke des Leitblechs zwischen äußerer Oberfläche und Kühlmittelkanal, die ausreichend stabil und hitzebeständig ist, um im Inneren der Brennkammer angeordnet zu sein.

In noch einer weiteren Ausgestaltungsvariante kann eine Vielzahl von Leitblechen an dem Brennkammerkörper einstückig gebildet sein und in das Innere der Brennkammer ragen. Ferner können alle der Vielzahl von Leitblechen an ihrem inneren Ende durch ein ringförmiges Leitblech (oder auch als inneres Leitblech bezeichnet) verbunden sein. Unter ringförmigem Leitblech ist hier nicht ausschließlich eine runde Form zu verstehen. Vielmehr kann die Form des ringförmigen Leitblechs der Querschnittsform des Brennkammerkörpers im Bereich der Leitbleche entsprechen. Ein solches im Inneren des Querschnitts des Brennkammerkörpers angeordnetes Leitblech dient ebenfalls der Verringerung oder Vermeidung von transversalen Schwingungen.

In einer Ausgestaltungsvariante kann das ringförmige Leitblech mindestens einen Kühlmittelkanal umfassen, der mit dem mindestens einen Kühlmittelkanal der Vielzahl von Leitblechen fluidisch gekoppelt ist. Alternativ kann der Kühlmittelkanal des ringförmigen Leitblechs mit einem oder mehreren Kühlmittelkanälen eines oder mehrerer der Vielzahl von Leitblechen fluidisch gekoppelt sein. Dadurch lässt sich das innere, ringförmige Leitblech aktiv kühlen.

In einer weiteren Ausgestaltungsvariante kann der mindestens eine Kühlmittelkanal des ringförmigen Leitblechs einen Kühlmittelausgang umfassen, der entweder auf einer der Brennkammer abgewandten Seite oder auf einer der Brennkammer zugewandten Seite angeordnet ist. Alternativ kann auch jeweils ein Kühlmittelausgang auf der der Brennkammer abgewandten und zugewandten Seite vorgesehen sein. Im Fall eines Kühlmittelausgangs auf der der Brennkammer abgewandten Seite kann das innere Leitblech so ausgestaltet sein, dass es an der Einspritzplatte des Einspritzkopfes anliegt. Dadurch lässt sich der Kühlmittelausgang des inneren Leitblechs als Zuleitung für Treibstoff (der üblicherweise das Kühlmittel darstellt) in den Brennkammerkopf verwenden. Im Fall eines Kühlmittelausgangs auf der der Brennkammer zugewandten Seite kann der Kühlmittelausgang als Einspritzelement ausgestaltet sein oder dazu eingerichtet sein, ein Einspritzelement darin anzuordnen. Somit lässt sich das innere Leitblech auch als in die Brennkammer ragendes Einspritzelement ausbilden.

Gemäß einem zweiten Aspekt zum besseren Verständnis der vorliegenden Offenbarung umfasst eine Brennkammer für ein Raketentriebwerk einen Brennkammerabschnitt gemäß dem ersten Aspekt oder einer der dazu beschriebenen Ausgestaltungsvarianten.

Gemäß einem dritten Aspekt zum besseren Verständnis der vorliegenden Offenbarung umfasst ein Raketentriebwerk einen Brennkammerabschnitt gemäß dem ersten Aspekt oder einer der dazu beschriebenen Ausgestaltungsvarianten oder umfasst eine Brennkammer gemäß dem zweiten Aspekt.

Gemäß einem vierten Aspekt zum besseren Verständnis der vorliegenden Offenbarung umfasst ein Verfahren zum Herstellen eines Brennkammerabschnitts gemäß dem ersten Aspekt oder einer seiner Ausgestaltungsvarianten ein Schichtbauverfahren, wobei der Brennkammerabschnitt im Schichtbauverfahren aufgebaut wird. Insbesondere kann dabei an Positionen, an denen die Kühlmittelkanäle des Brennkammerkörpers und der mindestens eine Kühlmittelkanal des Leitblechs liegen, kein Material durch das Schichtbauverfahren zusammengefügt werden.

Gemäß einem fünften Aspekt zum besseren Verständnis der vorliegenden Offenbarung umfasst ein Computer-lesbarer Datenträger Instruktionen, die, wenn sie auf einem Prozessor ausgeführt werden, eine Maschine dazu veranlassen, das Schichtbauverfahren gemäß dem vierten Aspekt durchzuführen. Bei diesen Instruktionen kann es sich um CAD-Daten handeln oder ähnliche Daten, die die Form des Brennkammerabschnitts gemäß dem ersten Aspekt und/oder der Brennkammer gemäß dem zweiten Aspekt beschreibt oder definiert, insbesondere so, dass eine Maschine den Brennkammerabschnitt und/oder die Brennkammer schichtweise formen kann.

Die oben beschriebenen Ausgestaltungen und Varianten können selbstverständlich kombiniert werden, ohne dass dies explizit beschrieben ist. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

Bevorzugte Ausführungsformen der Erfindung werden nun anhand der beigefügten schematischen Zeichnungen näher erläutert, wobei
- Figur 1: schematisch eine perspektivische Ansicht einer Brennkammer zeigt;
- Figur 2: schematisch einen Ausschnitt eines Brennkammerabschnitts zeigt; und
- Figur 3: schematisch einen Ausschnitt eines Brennkammerabschnitts mit ringförmigem Leitblech zeigt.

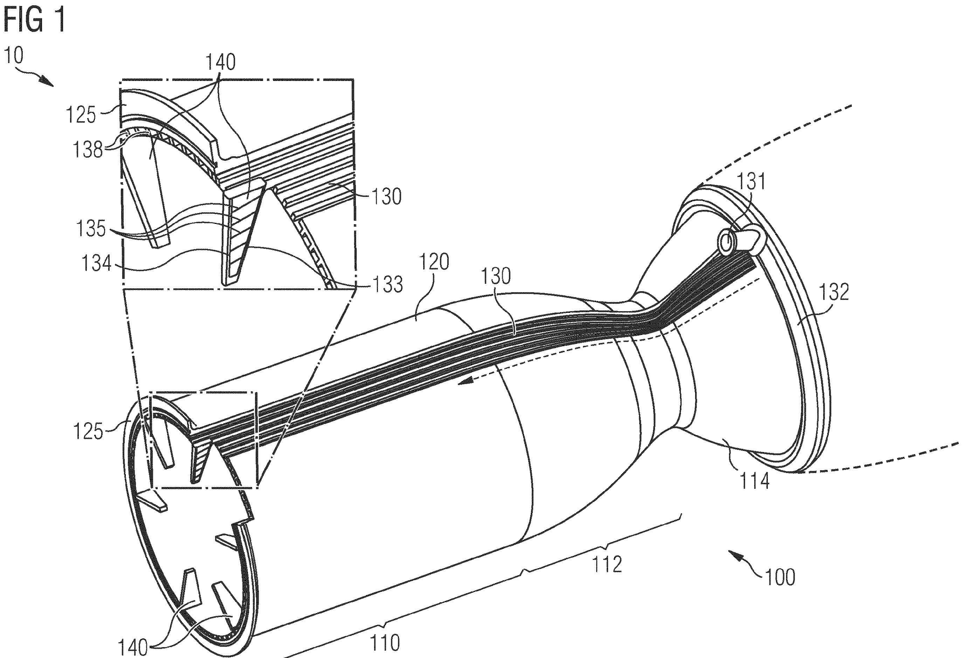

Figur 1 zeigt schematisch eine perspektivische Ansicht einer Brennkammer 100, die beispielsweise in einem Raketentriebwerk 10 verwendet werden kann. Die Düse des Raketentriebwerks 10 ist in Figur 1 lediglich mit gestrichelten Linien angedeutet. Die Brennkammer 100, wie sie in Figur 1 vereinfacht dargestellt ist, umfasst einen Brennkammerabschnitt 110, in dem ein Großteil der Vermischung und Verbrennung der Treibstoffkomponenten stattfindet. Stromabwärts (in Strömungsrichtung der Verbrennungsgase) schließt an den Brennkammerabschnitt 110 ein subsonischer Düsenabschnitt 112 an, in dem die Verbrennungsgase beschleunigt werden, gefolgt von einem Düsenüberschallsegment 114.

Im Bereich des Düsenüberschallsegments 114 befindet sich ein Anschluss 131 für Kühlmittel, der in einen Verteilring 132 (auch Verteilermanifold genannt) mündet. Der Verteilring 132 erstreckt sich in Umfangsrichtung und bildet ein durchgehendes ringförmiges Volumen. In dieses Volumen münden Kühlmittelkanäle 130 bzw. in Strömungsrichtung des Kühlmittels betrachtet (in Figur 1 durch gestrichelten Pfeil dargestellt) beginnen eine Vielzahl von Kühlmittelkanälen 130 in dem Verteilring 132.

Der Brennkammerabschnitt 110 besteht aus einem Brennkammerkörper 120 der ein Brennkammervolumen umschließt und in dem ebenfalls die Kühlmittelkanäle 130 angeordnet sind. Der in Figur 1 zylindrisch dargestellte Brennkammerabschnitt 110 kann jede beliebige Querschnittsform einnehmen, die der effizienten Verbrennung der Treibstoffkomponenten dient. Der Brennkammerabschnitt 110 umfasst ferner mindestens ein Leitblech (Baffle) 140 das einstückig mit dem Brennkammerkörper 120 gebildet ist und von dem Brennkammerkörper 120 in das Innere der Brennkammer ragt.

Am in Blickrichtung der Strömungsrichtung der Verbrennungsgase stromaufwärts gelegenen Ende des Brennkammerabschnitts 110 ist ein Flansch 125 vorgesehen. Dieser Flansch 125 dient dem Anschluss des Einspritzkopfes (nicht dargestellt). Wie in der Detailansicht in der Figur 1 gezeigt ist, befinden sich im Bereich des Flansch 125 eine Vielzahl von Kühlmittelausgängen 138, wobei jeder Kühlmittelkanal 130 in dem Brennkammerkörper 120 einen solchen Kühlmittelausgang 138 aufweist. Die Kühlmittelausgänge 138 sind in Umfangsrichtung entlang eines Querschnitts des Brennkammerkörpers 120 nebeneinander angeordnet. Die Kühlmittelausgänge 138 können in einen nicht dargestellten Verteilring oder Sammelring münden, der entsprechend dem Verteilring 132 am anderen Ende der Brennkammer 100 vorgesehen ist.

Wie insbesondere der Detailansicht in Figur 1 entnommen werden kann, weist mindestens eines der Leitbleche 140 einen Kühlmittelkanal 133 - 135 auf, um das Leitblech 140 zu kühlen. Der Kühlmittelkanal 133 - 135 ist mit mindestens einem der Kühlmittelkanäle 130 in dem Brennkammerkörper 120 fluidisch verbunden.

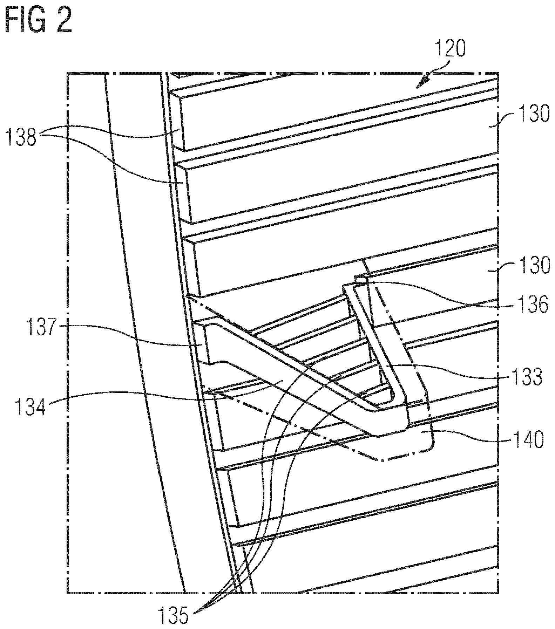

Figur 2 zeigt schematisch einen Ausschnitt eines Brennkammerabschnitts 110, wobei insbesondere die Kühlmittelkanäle 130 in dem Brennkammerkörper 120 und die Kühlmittelkanäle 133 - 135 in dem Leitblech 140 zu erkennen sind. Das Leitblech 140 ist nur beispielhaft trapezförmig dargestellt, kann aber jede beliebige Form einnehmen, um Schwingungen innerhalb des Brennkammerabschnitts 110 zu dämpfen. Das Leitblech 140 unterteilt das Brennkammervolumen in verschiedene Abschnitte, wodurch Schwingungen unterdrückt oder zumindest gedämpft werden. Je nach Art des Treibstoffs können die Schwingungen unterschiedliche Parameter aufweisen, sodass das Leitblech 140 in Längsrichtung und/oder Umfangsrichtung des Brennkammerabschnitts 110 entsprechend dimensioniert sein muss, um die ansonsten entstehenden Schwingungen zu dämpfen oder zu unterdrücken.

Das in Figur 2 beispielhaft dargestellte Leitblech 140 weist einen Kühlmitteleingang 136 und einen Kühlmittelausgang 137 auf. Der mindestens eine Kühlmittelkanal 133 - 135 des Leitblechs 140 verläuft dabei zwischen dem Kühlmitteleingang 136 und dem Kühlmittelausgang 137. Beispielsweise kann der Kühlmitteleingang 136 des Leitblechs 140 mit mindestens einem der Kühlmittelkanäle 130 in dem Brennkammerkörper 120 fluidisch verbunden sein. In einer einfachen Ausgestaltung, wie sie in Figur 2 gezeigt ist, weist das Leitblech in Umfangsrichtung des Brennkammerkörpers 120 eine Breite auf, die etwas größer ist als die Breite eines Kühlmittelkanals 130 in dem Brennkammerkörper 120. Somit können die Kühlmittelkanäle 133 - 135 in dem Leitblech 140 in Umfangsrichtung des Brennkammerkörpers 120 eine Breite aufweisen, die in etwa gleich der Breite eines Kühlmittelkanals 130 in dem Brennkammerkörper 120 ist. Insbesondere kann die Querschnittsfläche des Kühlmittelkanals 130 in dem Brennkammerkörper 120 der Querschnittsfläche des Kühlmittelkanals 133 bzw. des Kühlmitteleingangs 136 in dem Leitblech 140 entsprechen.

Der Kühlmitteleingang 136 des Leitblechs 140 kann mit dem mindestens einen der Kühlmittelkanäle 130 in dem Brennkammerkörper 120 fluidisch verbunden sein. Wie in Figur 2 zu erkennen ist, endet der Kühlmittelkanal 130 in dem Brennkammerkörper 120 in Längsrichtung des Brennkammerkörpers 120 betrachtet auf Höhe des Kühlmitteleingangs 136 des Leitblechs 140, sodass der Kühlmittelkanal 130 in dem Brennkammerkörper 120 in den Kühlmittelkanal 133 in dem Leitblech 140 mündet. Im Gegensatz dazu, sind in Längsrichtung des Brennkammerkörpers 120 betrachtet die benachbarten Kühlmittelkanäle 130 in dem Brennkammerkörper 120 länger.

Die Kühlmittelausgänge 138 jedes Kühlmittelkanals 130 in dem Brennkammerkörper 120 liegen in Umfangsrichtung des Kühlmittelkörpers 120 nebeneinander. Im Bereich des Leitblechs 140, wo der Kühlmittelkanal 130 in dem Brennkammerkörper 120 kürzer ist, ist einem Kühlmittelausgang 138 in dem Brennkammerkörper 120 der Kühlmittelausgang 137 des Leitblechs 140 benachbart angeordnet. Dadurch münden sämtliche Kühlmittelkanäle 130 in dem Brennkammerkörper 120 und auch die Kühlmittelkanäle 133 - 135 in dem Leitblech 140 in den Sammelring (nicht dargestellt), wie dies auch bei einer Vielzahl von Kühlmittelkanälen 130 in dem Brennkammerkörper 120 ohne Leitblech 140 der Fall wäre. Der Sammelring und die daran anschließenden Komponenten müssen daher nicht verändert werden.

Um eine ausreichende Kühlung des Leitblechs 140 zu erzielen, sieht das in Figur 2 dargestellte Leitblech 140 einen ersten Kühlmittelkanal 133 vor, der ein Kühlmittelzuleitungskanal ist. Der Kühlmittelzuleitungskanal 133 ist fluidisch mit dem (kürzeren) Kühlmittelkanal 130 in dem Brennkammerkörper 120 verbunden. Ein zweiter Kühlmittelkanal 134 in dem Leitblech 140 bildet einen Kühlmittelableitungskanal und mündet in den Kühlmittelausgang 137 des Leitblechs 140. Der Kühlmittelzuleitungskanal 133 und der Kühlmittelableitungskanal 134 sind fluidisch miteinander verbunden. Beispielsweise können Sie über mindestens einen dritten Kühlmittelkanal 135 miteinander verbunden sein. Je größer die Anzahl des mindestens einen dritten Kühlmittelkanals 135 ist, desto gleichmäßiger kann das Leitblech 140 von Kühlmittel durchströmt werden und desto gleichmäßiger wird es gekühlt.

Da die freie Spitze des Leitblechs 140, die am weitesten von dem Brennkammerkörper 120 beabstandet ist, am weitesten in die Brennkammer ragt, ist diese Spitze auch der höchsten Wärmebelastung ausgesetzt. Um weiterhin eine gleichmäßige Kühlung erzielen zu können, kann der Abstand zwischen zwei dritten Kühlmittelkanälen 135 mit zunehmendem Abstand vom Brennkammerkörper 120 kleiner werden.

Um auch die Außenseiten des Leitblechs 140 (in Strömungsrichtung der Verbrennungsgase betrachtet) zu kühlen, kann der Kühlmittelzuleitungskanal 133 entlang einer ersten Seite des Leitblechs 140 verlaufen und der Kühlmittelableitungskanal 134 entlang einer zweiten Seite des Leitblechs 140 verlaufen. Selbstverständlich können die Anordnung und der Verlauf der Kühlmittelkanäle 133 - 135 abweichend von den dargestellten Verläufen so gewählt werden, dass möglichst kühles Kühlmittel an den zu erwartenden heißesten Stellen des Leitblechs 140 vorbeigeführt wird.

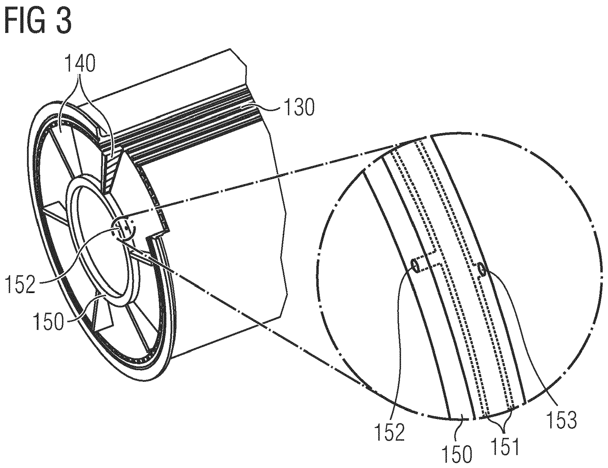

Figur 3 zeigt schematisch einen Ausschnitt eines Brennkammerabschnitts 110 mit einem ringförmigen Leitblech 150. Sowohl der Brennkammerabschnitt 110 als auch das ringförmige Leitblech 150 sind kreisförmig dargestellt. Selbstverständlich kann das ringförmige Leitblech 150 auch eine andere Form einnehmen, beispielsweise eine polygonale Form. Dieses ringförmige Leitblech 150 unterteilt ebenfalls das Brennkammervolumen, wodurch Schwingungen gedämpft oder vermieden werden.

Das ringförmige Leitblech 150 kann ebenfalls mindestens einen Kühlmittelkanal 151 umfassen, wobei in Figur 3 beispielhaft zwei Kühlmittelkanäle 151 an gegenüberliegenden Seiten (in Strömungsrichtung der Verbrennungsgase betrachtet) des ringförmigen Leitblechs 150 gezeigt sind. Dieser mindestens eine Kühlmittelkanal 151 in dem ringförmigen Leitblech 150 kann mit mindestens einem Kühlmittelkanal 133 - 135 in mindestens einem der Leitbleche 140 fluidisch gekoppelt sein, sodass Kühlmittel aus mindestens einem der Leitbleche 140 in das ringförmige Leitblech 150 strömen kann, um das ringförmige Leitblech 150 zu kühlen.

Optional hierzu kann mindestens einer der Kühlmittelkanäle 151 des ringförmigen Leitblechs 150 einen Kühlmittelausgang 152, 153 umfassen. So ein Kühlmittelausgang 152, 153 des ringförmigen Leitblechs 150 kann entweder auf einer der Brennkammer 100 abgewandten Seite oder auf einer der Brennkammer 100 zugewandten Seite angeordnet sein. Der der Brennkammer 100 abgewandte Kühlmittelausgang 152 lässt sich als Kühlmittelanschluss verwenden, um Kühlmittel in den Einspritzkopf zu leiten. Ein auf der Brennkammer 100 zugewandten Seite des Leitblechs 150 angeordneter Kühlmittelausgang 153 hingegen lässt sich als Einspritzelement verwenden. Beispielsweise kann in dem Kühlmittelausgang 153 ein Einspritzelement eingebaut oder integriert werden, wodurch Kühlmittel (hier eine Treibstoffkomponente) in einem von der Einspritzplatte (nicht dargestellt) beabstandeten Bereich in die Brennkammer 100 geleitet werden kann.

Ebenfalls optional können Kühlmittelausgänge (nicht dargestellt) auch in den Leitblechen 140 angeordnet werden. Dabei können diese Kühlmittelausgänge auch auf einer der Brennkammer 100 abgewandten Seite oder auf einer der Brennkammer 100 zugewandten Seite angeordnet sein und die gleichen Funktionen wie die Kühlmittelausgänge 152, 153 erfüllen.

Aus Figuren 2 und 3 ist ersichtlich, dass der Brennkammerabschnitt 110 (oder die gesamte Brennkammer 100) in einem Schichtbauverfahren (3D-Druck oder ALM) recht schnell und einfach hergestellt werden kann. Das das Leitblech 140 und/oder ringförmige Leitblech 150 bildende Material kann mit dem Brennkammerkörper 120 schichtweise aufgetragen werden und der gesamte Brennkammerabschnitt 110 kann schichtweise hergestellt werden. Sämtliche Kühlmittelkanäle 130, 133, 134, 135, 151 können dabei durch Weglassen eines Materialauftrags und somit Erzeugen eines Hohlraums hergestellt werden. Durch das Schichtbauverfahren können die unterschiedlichen und gegebenenfalls verzweigten Hohlräume, die die Kühlmittelkanäle 130, 133, 134, 135, 151 und Kühlmittelausgänge 137, 138, 152, 153 bilden, in einfacher Weise hergestellt werden. Dadurch lassen sich auch komplexe Strukturen, insbesondere im Bereich der Leitbleche 140, 150, verwirklichen, die mit anderen Herstellerverfahren nicht möglich wären. Somit lassen sich gut zu kühlende Leitbleche 140, 150 in einem einfachen Herstellerverfahren bereitstellen, wobei insbesondere auch eine gute Schwingungsdämpfung erzielt werden kann, unabhängig von einem komplizierten Verlauf der Kühlmittelkanäle 130, 133, 134, 135, 151.

## Patentansprüche

1. Brennkammerabschnitt (110) für eine Brennkammer (100) für ein Raketentriebwerk (10), wobei der Brennkammerabschnitt (110) umfasst:
- einen Brennkammerkörper (120), der ein Brennkammervolumen umschließt und in dem Kühlmittelkanäle (130) angeordnet sind, wobei der Brennkammerkörper (120) zylinderförmig ist oder einen polygonalen oder elliptischen Querschnitt aufweist, und wobei der Brennkammerkörper (120) dazu eingerichtet ist, an einen Einspritzkopf angeschlossen zu werden,
**gekennzeichnet durch**
- mindestens ein Leitblech (140), das einstückig mit dem Brennkammerkörper (120) gebildet ist, an einer Innenseite des Brennkammerkörpers (120) angeordnet ist und von dem Brennkammerkörper (120) in das Innere der Brennkammer ragt,
wobei das mindestens eine Leitblech (140) mindestens einen Kühlmittelkanal (133 - 135) umfasst, der mit mindestens einem der Kühlmittelkanäle (130) in dem Brennkammerkörper (120) fluidisch verbunden ist.

2. Brennkammerabschnitt (110) gemäß Anspruch 1, wobei das Leitblech (140) einen Kühlmitteleingang (136) und einen Kühlmittelausgang (137) aufweist, und wobei der mindestens eine Kühlmittelkanal (133 - 135) des Leitblechs (140) zwischen dem Kühlmitteleingang (136) und dem Kühlmittelausgang (137) verläuft.

3. Brennkammerabschnitt (110) gemäß Anspruch 2, wobei der Kühlmitteleingang (136) des Leitblechs (140) mit dem mindestens einen der Kühlmittelkanäle (130) in dem Brennkammerkörper (120) fluidisch verbunden ist.

4. Brennkammerabschnitt (110) gemäß Anspruch 2 oder 3, wobei jeder der Kühlmittelkanäle (130) in dem Brennkammerkörper (120) einen Kühlmittelausgang (138) aufweist, und wobei in Umfangsrichtung entlang eines Querschnitts des Brennkammerkörpers (120) neben einem der Kühlmittelausgänge (138) ein weiterer Kühlmittelausgang (138) eines Kühlmittelkanals (130) in dem Brennkammerkörper (120) oder der Kühlmittelausgang (137) des Leitblechs (140) angeordnet ist.

5. Brennkammerabschnitt (110) gemäß einem der Ansprüche 2 bis 4, wobei ein Kühlmittelkanal (130) in dem Brennkammerkörper (120) in Längsrichtung des Brennkammerkörpers (120) auf Höhe des Kühlmitteleingangs (136) des Leitblechs (140) endet und in den mindestens einen Kühlmittelkanal (133 - 135) des Leitblechs (140) mündet.

6. Brennkammerabschnitt (110) gemäß einem der Ansprüche 1 bis 5, wobei ein erster Kühlmittelkanal (133) in dem Leitblech (140) ein Kühlmittelzuleitungskanal ist, der mit dem mindestens einen Kühlmittelkanal (130) in dem Brennkammerkörper (120) fluidisch verbunden ist und auf einer ersten Seite des Leitblechs (140) verläuft, und wobei ein zweiter Kühlmittelkanal (134) in dem Leitblech (140) ein Kühlmittelableitungskanal ist, der auf einer zweiten Seite des Leitblechs (140) verläuft, und wobei vorzugsweise mindestens ein dritter Kühlmittelkanal (135) den Kühlmittelzuleitungskanal (133) mit dem Kühlmittelableitungskanal (134) fluidisch verbindet.

7. Brennkammerabschnitt (110) gemäß einem der Ansprüche 1 bis 6, wobei eine Vielzahl von Leitblechen (140) in das Innere der Brennkammer ragt, und wobei alle der Vielzahl von Leitblechen (140) an ihrem inneren Ende durch ein ringförmiges Leitblech (150) verbunden sind.

8. Brennkammerabschnitt (110) gemäß Anspruch 7, wobei das ringförmige Leitblech (150) mindestens einen Kühlmittelkanal (151) umfasst, der mit dem mindestens einen Kühlmittelkanal (133 - 135) der Vielzahl von Leitblechen (140) fluidisch gekoppelt ist.

9. Brennkammerabschnitt (110) gemäß Anspruch 8, wobei der mindestens eine Kühlmittelkanal (151) des ringförmigen Leitblechs (150) einen Kühlmittelausgang (152, 153) umfasst, der vorzugsweise entweder auf einer der Brennkammer abgewandten Seite oder auf einer der Brennkammer zugewandten Seite angeordnet ist.

10. Brennkammer (100) für ein Raketentriebwerk (10) mit einem Brennkammerabschnitt (110) gemäß einem der Ansprüche 1 bis 9.

11. Raketentriebwerk (10) mit einem Brennkammerabschnitt (110) gemäß einem der Ansprüche 1 bis 9 oder mit einer Brennkammer (100) gemäß Anspruch 10.

12. Verfahren zum Herstellen eines Brennkammerabschnitts (110) gemäß einem der Ansprüche 1 bis 9, wobei der Brennkammerabschnitt (110) im Schichtbauverfahren aufgebaut wird, wobei an Positionen, an denen die Kühlmittelkanäle (130) des Brennkammerkörpers (120) und der mindestens eine Kühlmittelkanal (133 - 135) des Leitblechs (140) liegen, kein Material durch das Schichtbauverfahren zusammengefügt wird.

13. Computer-lesbarer Datenträger, der Instruktionen umfasst, die, wenn sie auf einem Prozessor ausgeführt werden, eine Maschine dazu veranlassen, das Schichtbauverfahren gemäß Anspruch 12 durchzuführen.

## Claims

1. A combustion chamber section (110) for a combustion chamber (100) for a rocket engine (10), wherein the combustion chamber section (110) comprising:
- a combustion chamber body (120) which encloses a combustion chamber volume and in which coolant channels (130) are arranged, wherein the combustion chamber body (120) is cylindrical or has a polygonal or elliptical cross-section, and wherein the combustion chamber body (120) is adapted to be connected to an injection head,
**characterised by**
- at least one baffle (140), which is formed integrally with the combustion chamber body (120), arranged on an inner side of the combustion chamber body (120) and projects from the combustion chamber body (120) into the interior of the combustion chamber,
wherein the at least one baffle (140) comprises at least one coolant channel (133 - 135) which is fluidically connected to at least one of the coolant channels (130) in the combustion chamber body (120).

2. The combustion chamber section (110) according to claim 1, wherein the baffle (140) has a coolant inlet (136) and a coolant outlet (137), and wherein the at least one coolant channel (133 - 135) of the baffle (140) extends between the coolant inlet (136) and the coolant outlet (137).

3. The combustion chamber section (110) according to claim 2, wherein the coolant inlet (136) of the baffle (140) is fluidically connected to the at least one of the coolant channels (130) in the combustion chamber body (120).

4. The combustion chamber section (110) according to claim 2 or 3, wherein each of the coolant channels (130) in the combustion chamber body (120) has a coolant outlet (138), and wherein a further coolant outlet (138) of a coolant channel (130) in the combustion chamber body (120) or the coolant outlet (137) of the baffle (140) is arranged in the circumferential direction along a cross-section of the combustion chamber body (120) next to one of the coolant outlets (138).

5. The combustion chamber section (110) according to one of claims 2 to 4, wherein a coolant channel (130) in the combustion chamber body (120) ends in the longitudinal direction of the combustion chamber body (120) at the level of the coolant inlet (136) of the baffle (140) and opens into the at least one coolant channel (133 - 135) of the baffle (140).

6. The combustion chamber section (110) according to any one of claims 1 to 5, wherein a first coolant channel (133) in the baffle (140) is a coolant supply channel that is fluidically connected to the at least one coolant channel (130) in the combustion chamber body (120) and extends on a first side of the baffle (140), and wherein a second coolant channel (134) in the baffle plate (140) is a coolant discharge channel which extends on a second side of the baffle plate (140), and wherein preferably at least one third coolant channel (135) fluidically connects the coolant supply channel (133) to the coolant discharge channel (134).

7. The combustion chamber section (110) according to any one of claims 1 to 6, wherein a plurality of baffles (140) protrude into the interior of the combustion chamber, and wherein all of the plurality of baffles (140) are connected at their inner end by an annular baffle (150).

8. The combustion chamber section (110) according to claim 7, wherein the annular baffle (150) comprises at least one coolant channel (151) which is fluidically coupled to the at least one coolant channel (133-135) of the plurality of baffles (140).

9. The combustion chamber section (110) according to claim 8, wherein the at least one coolant channel (151) of the annular baffle (150) comprises a coolant outlet (152, 153), which is preferably arranged either on a side facing away from the combustion chamber or on a side facing the combustion chamber.

10. A combustion chamber (100) for a rocket engine (10) with a combustion chamber section (110) according to one of claims 1 to 9.

11. A rocket engine (10) with a combustion chamber section (110) according to one of claims 1 to 9 or with a combustion chamber (100) according to claim 10.

12. A method of manufacturing a combustion chamber section (110) according to any one of claims 1 to 9, wherein the combustion chamber section (110) is built up by an additive layer manufacturing technique, wherein at positions where the coolant channels (130) of the combustion chamber body (120) and the at least one coolant channel (133-135) of the baffle (140) are located, no material is joined by the additive layer manufacturing technique.

13. A computer-readable medium comprising instructions which, when executed on a processor, cause a machine to perform the additive layer manufacturing process according to claim 12.

## Revendications

1. Section de chambre de combustion (110) pour une chambre de combustion (100) pour un moteur-fusée (10), la section de chambre de combustion (110) comprenant:
- un corps de chambre de combustion (120), qui entoure un volume de chambre de combustion et dans lequel sont disposés des conduits de liquide de refroidissement (130), dans laquelle le corps de chambre de combustion (120) est cylindrique ou présente une section elliptique ou polygonale, et dans laquelle le corps de chambre de combustion (120) est conçu pour être raccordé à une tête d'injection,
**caractérisée en ce que**
- au moins un déflecteur (140) qui est formé d'un seul tenant avec le corps de chambre de combustion (120) est disposé sur un coté intérieur du corps de chambre de combustion (120) et fait saillie à l'intérieur de la chambre de combustion,
dans laquelle l'au moins un déflecteur (140) comprend au moins un conduit de refroidissement (133 - 135) qui est relié fluidiquement à au moins l'un des conduits de refroidissement (130) dans le corps de chambre de combustion (120).

2. Section de chambre de combustion (110) selon la revendication 1, dans laquelle le déflecteur (140) comprend une entrée de liquide de refroidissement (136) et une sortie de liquide de refroidissement (137), et dans laquelle l'au moins un conduit de liquide de refroidissement (133 - 135) du déflecteur (140) s'étend entre l'entrée de liquide de refroidissement (136) et la sortie de liquide de refroidissement (137).

3. Section de chambre de combustion (110) selon la revendication 2, dans lequel l'entrée de liquide de refroidissement (136) du déflecteur (140) est reliée fluidiquement à l'au moins un des conduits de liquide de refroidissement (130) dans le corps de chambre de combustion (120).

4. Section de chambre de combustion (110) selon la revendication 2 ou 3, dans laquelle chacun des conduits de liquide de refroidissement (130) dans le corps de chambre de combustion (120) comprend une sortie de liquide de refroidissement (138), et dans laquelle dans la direction circonférentielle le long d'une section transversale du corps de chambre de combustion (120) à proximité d'une des sorties de liquide de refroidissement (138) est disposée une autre sortie de liquide de refroidissement (138) d'un conduit de liquide de refroidissement (130) dans le corps de chambre de combustion (120) ou la sortie de liquide de refroidissement (137) du déflecteur (140).

5. Section de chambre de combustion (110) selon l'une quelconque des revendications 2 à 4, dans laquelle un canal de liquide de refroidissement (130) débouche dans le corps de chambre de combustion (120) dans le sens de la longueur du corps de chambre de combustion (120) à la hauteur de l'entrée de liquide de refroidissement (136) du déflecteur (140) et dans l'au moins un canal de liquide de refroidissement (133 - 135) du déflecteur (140).

6. Section de chambre de combustion (110) selon l'une quelconque des revendications 1 à 5, dans laquelle un premier conduit de liquide de refroidissement (133) dans le déflecteur (140) est un conduit d'alimentation en liquide de refroidissement, qui est relié fluidiquement avec l'au moins un conduit de liquide de refroidissement (130) dans le corps de chambre de combustion (120) et s'étend sur un premier côté du déflecteur (140), et dans laquelle un deuxième conduit de liquide de refroidissement (134) dans le déflecteur (140) est un conduit d'évacuation de liquide de refroidissement, qui s'étend sur un second côté du déflecteur (140), et dans laquelle de préférence au moins un troisième conduit de liquide de refroidissement (135) relie fluidiquement le conduit d'alimentation en liquide de refroidissement (133) au conduit d'évacuation de liquide de refroidissement (134).

7. Section de chambre de combustion (110) selon l'une quelconque des revendications 1 à 6, dans laquelle une pluralité de déflecteurs (140) font saillie à l'intérieur de la chambre de combustion et dans laquelle l'ensemble de la pluralité des déflecteurs (140) sont reliés sur leur extrémité intérieure par un déflecteur (150) annulaire.

8. Section de chambre de combustion (110) selon la revendication 7, dans laquelle le déflecteur (150) annulaire comprend au moins un conduit de liquide de refroidissement (151) qui est raccordé fluidiquement à l'au moins conduit de liquide de refroidissement (133 - 135) de la pluralité des déflecteurs (140).

9. Section de chambre de combustion (110) selon la revendication 8, dans laquelle l'au moins un conduit de liquide de refroidissement (151) du déflecteur (150) annulaire comprend une sortie de liquide de refroidissement (152, 153) qui, de préférence, est disposée soit sur un côté opposé à la chambre de combustion soit sur un côté orienté vers la chambre de combustion.

10. Chambre de combustion (100) pour un moteur-fusée (10) comprenant une section de chambre de combustion (110) selon l'une quelconque des revendications 1 à 9.

11. Moteur-fusée (10) comprend une section de chambre de combustion (110) selon l'une quelconque des revendications 1 à 9 ou dotée d'une chambre de combustion (100) selon la revendication 10.

12. Procédé de fabrication d'une section de chambre de combustion (110) selon l'une quelconque des revendications 1 à 9, dans lequel la section de chambre de combustion (110) est construite selon le procédé de fabrication en couches, dans lequel à des positions auxquelles se trouvent les conduits de liquide de refroidissement (130) du corps de chambre de combustion (120) et de l'au moins un conduit de liquide de refroidissement (133 135) du déflecteur (140), aucune matière n'est assemblée selon le procédé de fabrication en couches.

13. Support de données lisible par ordinateur, qui comprend des instructions, qui, lorsqu'elles sont exécutées sur un processeur, amènent une machine à exécuter le procédé de fabrication en couches selon la revendication 12.
